# EUROPEAN PATENT APPLICATION

(11) **EP 2 803 561 A2**
(43) Date of publication of application: **19.11.2014**
(21) Application number: 13197838.9
(22) Date of filing: 17.12.2013
(51) Int. Cl.: B62D 33/063

(54) **Motor vehicle with transport body**

(30) Priority: 16.05.2013 IT VR20130116
(71) Applicant: Industrial - Car - 4X4 - di Filippini Flavia & C. S.N.C., 25129 Brescia (IT)
(72) Inventor: Molinari, Luca, 25129 BRESCIA (IT)
(74) Representative: Modiano, Micaela Nadia

(57) **Abstract**

A motor vehicle (1) with transport body comprising a chassis (3) that is associated at the front with a cab (4) and at the rear with a transport body (2); the motor vehicle (1) comprising means (5) for the relative movement of the cab (4) with respect to the chassis (3) which are adapted to move on command the cab (4) between a first position, intended to be assumed during the movement of the motor vehicle (1), and at least one second position, intended to be assumed during the parking of the motor vehicle (1), the second position being arranged at a lower level than the first position with respect to the ground in order to facilitate the user in climbing into and out of the cab (4).

## Description

The present invention relates to a motor vehicle with a transport body.

Motor vehicles for the collection and transport of urban waste which are normally used for door-to-door collection are constituted by a chassis that is associated, at the front, with a cab and, at the rear, with a body for the collection and transport of waste.

Very often, the operator who drives the motor vehicle also has to carry out the collection of waste and, consequently, he/she continually has to climb out of and back into the cab.

This is evidently extremely impractical as well as inconvenient.

Attention is further drawn to the fact that motor vehicles equipped with work equipment or for door-to-door collection must be able to move under their own power, often over short distances, in historic town centers or in densely inhabited areas: conventional motor vehicles are typically motorized with internal combustion engines, and for this reason they are excessively pollutant and limited in their use.

The aim of the present invention is provide a motor vehicle with transport body which is capable of reducing, or at least drastically limiting, the above mentioned drawbacks.

Within this aim, an object of the present invention is to provide a motor vehicle with transport body which facilitates the user in climbing into and out of the cab.

Another object of the present invention is to devise a motor vehicle with transport body which is capable of moving under its own power freely even in areas with vehicle traffic restrictions.

This aim and these and other objects which will become better apparent hereinafter are all achieved by a motor vehicle with transport body according to claim 1.

Further characteristics and advantages of the invention will become better apparent from the description of some preferred but not exclusive embodiments of a motor vehicle with transport body, which are illustrated by way of non-limiting example in the accompanying drawings wherein:
Figure 1 is a side elevation view of a motor vehicle with transport body according to the invention, with the cab in the first position;
Figure 2 is a view similar to the one in Figure 1 but with the cab in a second position;

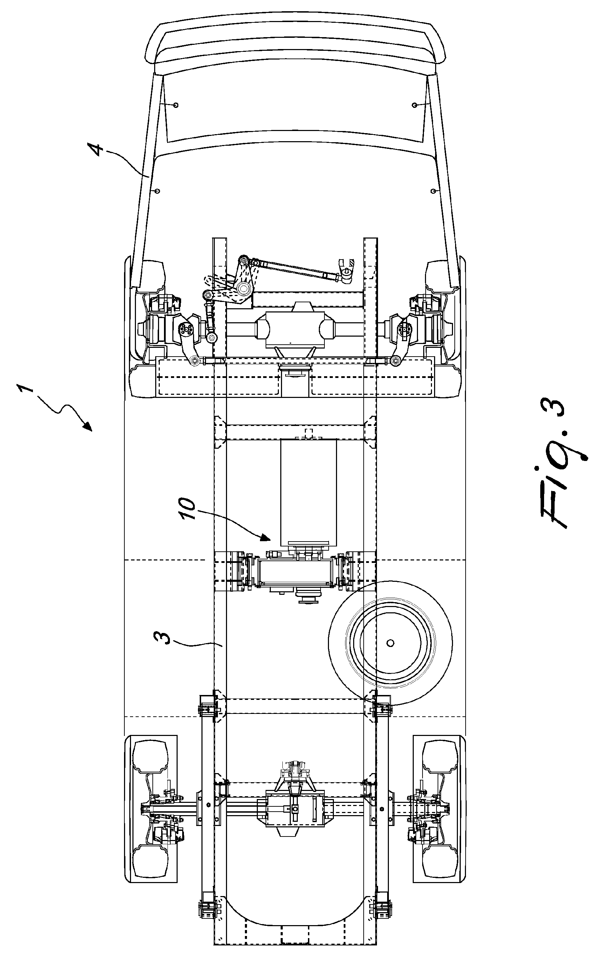

Figure 3 is a cross-section view of the motor vehicle according to the invention taken along a plane of arrangement parallel to the ground; and

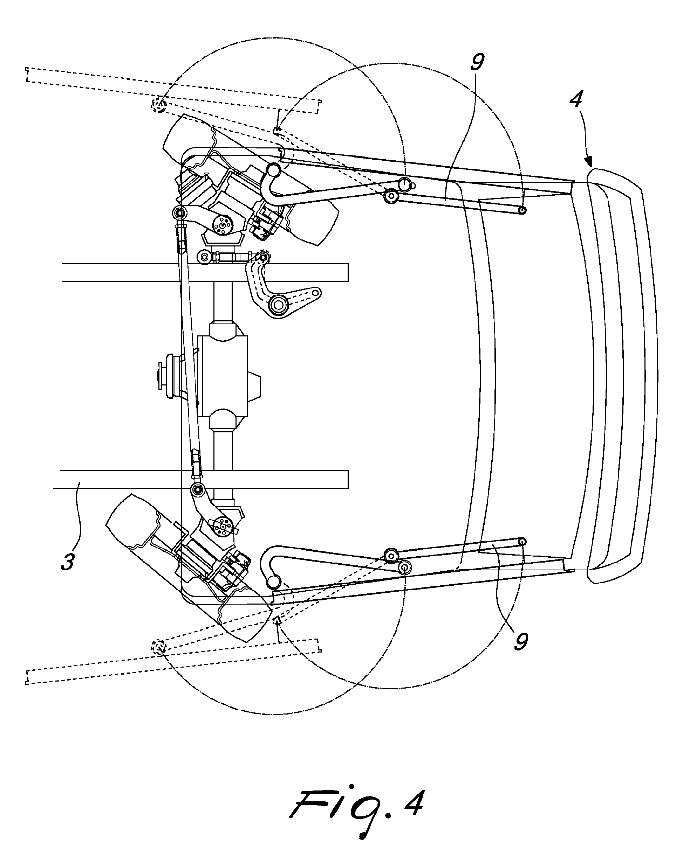

Figure 4 is an enlarged-scale view of the cab similar to that in Figure 3.

In the embodiments illustrated, individual characteristics shown in relation to specific examples may in reality be interchanged with other, different characteristics, existing in other embodiments.

With reference to the figures, the present invention relates to a motor vehicle with transport body, which is generally designated with the reference numeral 1.

The motor vehicle 1 comprises a chassis 3 that is associated at the front with a cab 4 and at the rear with a transport body 2.

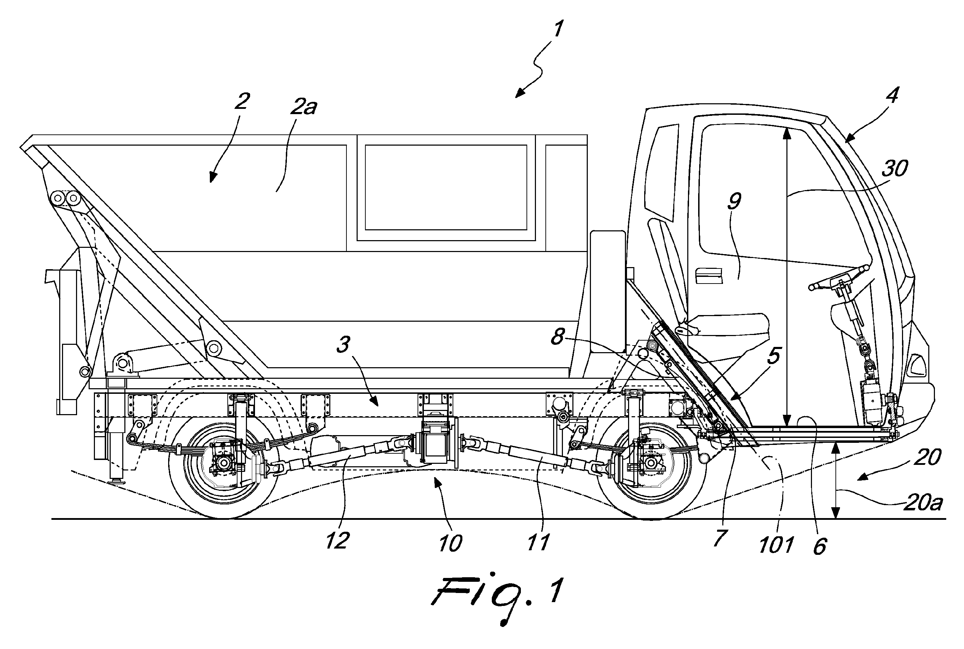

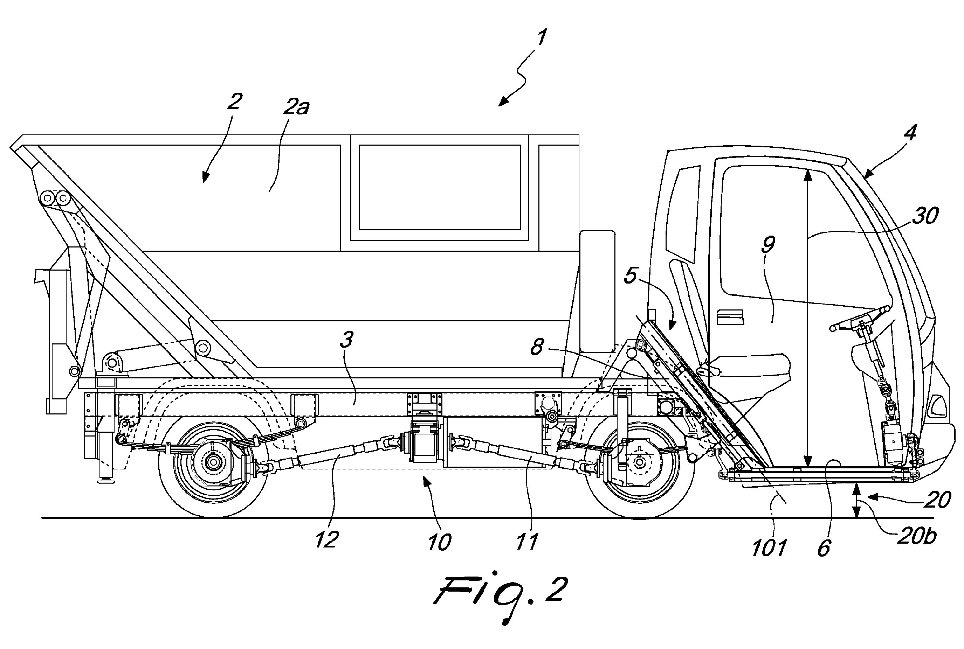

According to the present invention, the motor vehicle 1 comprises relative movement means 5 of the cab 4 with respect to the chassis 3, which are adapted to move on command the cab 4 between a first position (shown in Figure 1) intended to be assumed during the movement of the motor vehicle 1 and at least one second position (shown in Figure 2) intended to be assumed during the parking of the motor vehicle 1.

Specifically, the second position of the cab is arranged at a lower height from the ground than the first position so as to facilitate climbing out of and back into the cab 4 for the user.

Advantageously, as will be described below, the motor vehicle 1 is an electrically-driven vehicle powered by a battery, conveniently lithium, that is controlled by an autonomous mini-generator.

The motor vehicle 1 is mainly equipped for uses that involve operations in populated centers, with 2-wheel drive traction.

There is no reason why four-wheel drive cannot be provided if, for example, the motor vehicle 1 needs to be used in mountainous areas.

Merely for the purposes of example, the transport body 2 can be fitted out:
- with work equipment;
- for door-to-door transport, work and/or services in particular in urban centers;
- for use by street vendors;
- for door-to-door general and differentiated waste collection systems.

The motor vehicle 1 comprises an electric motor 10 that is powered by batteries and is water-cooled: in particular, the output shaft of the electric motor 10 is connected to a synchronized automatic gearbox with at least two speeds.

The electric motor 10 is adapted to act as a generator as well, so as to allow the recovery of energy during braking or during downhill travel.

The electric motor 10 is also connected to a hydraulic pump for the services required of the equipment.

As mentioned, the cab 4 can pass from the first position to the second position (lowered with respect to the first position) so as to facilitate access to and from the ground, as the operator or the driver will be continually climbing out of/back into the cab 4.

Such situations are, for example, extremely frequent in door-to-door differentiated waste collection operations and on other occasions involving short movements.

The first, "cab raised" position is used for faster movement and for movement over long distances.

Advantageously, in the second position, the cab 4 has its bottom 6 at the same height as the level of the footpath.

It can be easily understood that, in the second position, with the cab lowered, climbing out of/back into the cab 4 will be enormously facilitated for the operator.

The relative movement means 5 comprise at least one guide 7 that is supported by the chassis 3 and can be engaged slidingly by at least one respective slider body that is supported by the cab 4.

At least one linear actuator 8 acts, on command, between the cab 4 and the chassis 3 and is adapted to allow the controlled sliding of the slider or sliders along the respective guide 7 and, consequently, the transition from the first to the second position and vice versa.

In particular, the linear actuator 8 comprises a hydraulic actuator or an electrical actuator.

Advantageously, the cab 4 has at least one lateral access door 9 that is designed, during opening and closing, to have a longitudinal translational component.

This can be achieved by providing lateral access doors 9 with a closing and opening movement that follows a modified parallelogram, which are moved longitudinally along the motor vehicle, thus particularly limiting the lateral space occupation, and facilitating the exit and entry of the driver or operator.

Driving the motor vehicle is electronically servo-controlled, and when the motor vehicle 1 is stationary, there is no absorption and consumption of energy by the electric motor 10.

It is evident that the continual starts and stops result in an advantageous saving.

In fact much of the energy required in starting is returned when stopping in that the braking of the motor vehicle 1 is managed by the electronic system through the electric motor 10 which becomes a generator, not using the traditional braking system with brake shoes.

Among other things, this makes it possible to avoid the dispersion into the environment of friction material in the form of dust.

The mechanical braking system, which is fitted on the motor vehicle 1 in any case, is only used in an emergency or while parked.

With the electric motor/generator system, the capacity for braking in the minor space possible is automatically exploited to the utmost, within the limits of the adherence of the wheels to the ground.

Engagement of the automatic gearbox with two or more speeds, as well as the presence, if any, of the distributor of four-wheel drive between the electric motor 10 and the differential bridges of the motor vehicle 1, enables the electric motor 10, when starting, to develop a faster acceleration with less overload, with automatic passage to the higher ratio for top speed and vice versa, when decelerating, return to the lower ratio.

When the motor vehicle 1 is stationary, if hydraulic power is needed for the operation of the work equipment, the electric motor 10 is connected to the hydraulic pump.

The power supply of the electric motor 10 is provided by batteries, advantageously lithium, which thanks to an adapted electronic apparatus can be recharged at night, when electricity is cheaper.

Advantageously, an autonomous generator is mounted on the motor vehicle 1 and can be powered by fuel (for example gasoline or diesel).

Such generator is conveniently silenced and, if needed, automatically enters operation in order to restore the level of charge of the batteries.

This system makes it possible to avoid breakdowns in the event of prolonged use of the motor vehicle 1.

Two different versions of the gearbox with at least two speeds can be envisaged: a first version for vehicles with front-wheel drive only and a second version for vehicles with front- and rear-wheel drive.

Engagement of the slow ratio and the fast ratio, as with the engagement of four-wheel drive in a vehicle with four driven wheels, can be achieved by way of a synchronization device that is actuated by electrical and/or hydraulic actuators which are automatically managed by the electronic apparatus, as a function of the speeds reached or of the torque required to the wheels for forward motion.

The synchronization device for engaging the gears also has an idle position, so that the same electric motor used for driving can be used for actuating the hydraulic pump, or a power take-off for actuating work equipment when the motor vehicle 1 is stationary, it being possible to make all the power of the electric motor 10 available for heavy services.

Engagement of the power take-off or of the hydraulic pump also occurs with electrical or hydraulic actuators.

According to a preferred embodiment, the cab 4 is provided internally with a height, designated with the reference numeral 30, that is comprised between 165 cm and 210 cm cm in order to allow the entry and exit of the user in an upright position.

Conveniently, the cab 4 has a substantially flat bottom 6 that is adapted to allow the user to get into and get out of the motor vehicle 1 on either side.

In the cab 4 the operator can thus get in and out while in an upright position, and can easily use both the left-hand and right-hand doors, in that the bottom is perfectly flat, with no crossbeam or reinforcement protruding from the floor.

The guide is servo-controlled with an electric system or, as an alternative, with a hydraulic system, so as to reduce the effort of the driver.

It is possible for the motor vehicle 1 to be provided with obstacle position sensors that limit the advancement speed of the vehicle when the cab 4 is in the second (lowered) position, by reporting the presence of any obstacles (footpaths or the like) and stopping the vehicle before a collision occurs.

When the cab 4 is in the first (raised) position, an irreversible mechanical system keeps it in the raised position.

Release, and thus the transition from the first position to the second position, is possible only when the motor vehicle 1 is stationary.

The guide 7 extends along an inclined longitudinal direction 101 with respect to the longitudinal axis of the motor vehicle 1.

Specifically, the guide 7 lies on an inclined plane and its direction of extension tends to approach the ground as it proceeds toward the front portion of the motor vehicle 1.

The rear axle and the front bridge, which are fixed on leaf springs and/or spiral springs with hydraulic shock absorbers, have disc brakes on each wheel with hydraulic calipers, which are actuated by way of pedals in the cab 4 in an emergency only, and with a manual lever for parking.

The lithium battery pack that is fitted immediately behind the cab 4 is arranged in an adapted strengthened compartment with guides for sideways extraction. These do not require any maintenance and the electronic apparatus of the motor vehicle also has an adapted battery charger and controls all steps of recharging and use, while engaging the generator in the event of prolonged use.

The use of a motor vehicle with transport body according to the invention is evident from the foregoing description.

In particular, when the motor vehicle 1 needs to move at a certain speed, the relative movement means 5 bring the cab 4 to the first, raised position (shown in Figure 1) and keep it there, while, when the motor vehicle 1 is stopped and if the user has to climb out of the cab 4, the movement means bring the cab 4 to the second position (shown in Figure 2).

Specifically, the second position of the cab is arranged at a lower height (conveniently the height of the footpath) from the ground than the first position so as to facilitate climbing out of and back into the cab 4 for the user.

In practice it has been found that in all the embodiments the invention has achieved the intended aim and objects.

In practice the materials employed, as well as the dimensions and the contingent shapes, may be any according to requirements.

Moreover, all the details may be substituted by other, technically equivalent elements.

The disclosures in Italian Patent Application No. VR2013A000116 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A motor vehicle (1) with transport body comprising a chassis (3) that is associated at the front with a cab (4) and at the rear with a transport body (2), **characterized in that** it comprises means (5) for the relative movement of said cab (4) with respect to said chassis (3) which are adapted to move on command said cab (4) between a first position, intended to be assumed during the movement of said motor vehicle (1), and at least one second position, intended to be assumed during the parking of said motor vehicle (1), said second position being arranged at a lower level than said first position with respect to the ground in order to facilitate the user in climbing into and out of said cab (4).

2. The motor vehicle (1) according to claim 1, **characterized in that** said transport body is selected from the group that comprises:
- a body fitted with work equipment;
- a transport body for door-to-door work and/or services;
- a body equipped for street vendors;
- a body for door-to-door collection of waste (2a).

3. The motor vehicle (1) according to one or more of the preceding claims, **characterized in that** said cab (4) is provided internally with a height that is comprised between 165 cm and 210 cm in order to allow the entry and exit of the user in an upright position.

4. The motor vehicle (1) according to one or more of the preceding claims, **characterized in that** said cab (4) has a substantially flat bottom (6) that is adapted to allow the user to get into and get out of said motor vehicle (1) on either side.

5. The motor vehicle (1) according to one or more of the preceding claims, **characterized in that** said relative movement means (5) comprise at least one guide (7) that is supported by said chassis (3) and can be engaged slidingly by at least one respective slider body that is supported by said cab (4), at least one linear actuator (8) being provided which acts between said cab (4) and said chassis (3) and is adapted to allow the controlled sliding of said at least one slider along the respective guide (7).

6. The motor vehicle (1) according to one or more of the preceding claims, **characterized in that** said linear actuator (8) comprises a hydraulic actuator or an electrical actuator.

7. The motor vehicle (1) according to one or more of the preceding claims, **characterized in that** said cab (4) has at least one lateral access door (9) that is designed, during opening, to have a longitudinal translational component.

8. The motor vehicle (1) according to one or more of the preceding claims, **characterized in that** it comprises an electric motor (10) that is powered by batteries and is water-cooled, the output shaft of said electric motor (10) being connected to a synchronized automatic gearbox with at least two speeds.

9. The motor vehicle (1) according to one or more of the preceding claims, **characterized in that** said electric motor (10) is adapted to act as a generator so as to allow the recovery of energy during braking or during downhill travel.

10. The motor vehicle (1) according to one or more of the preceding claims, **characterized in that** said guide (7) is extended along a direction (101) that is inclined with respect to the longitudinal axis of said motor vehicle (1).
